# EUROPEAN PATENT APPLICATION

(11) **EP 4 841 701 A1**
(43) Date of publication of application: **18.11.2026**
(21) Application number: 26166783.6
(22) Date of filing: 23.03.2026
(51) Int. Cl.: H01M 4/36, H01M 4/38, H01M 10/0562

(54) **BATTERY AND BATTERY MANUFACTURING METHOD**

(30) Priority: 15.05.2025 JP 2025082106
(71) Applicant: Toyota Jidosha Kabushiki Kaisha, Toyota-shi, Aichi-ken 471-8571 (JP)
(72) Inventor: NOMOTO, Kazushige, Toyota-shi, Aichi-ken, 471-8571 (JP); KUDO, So, Toyota-shi, Aichi-ken, 471-8571 (JP)
(74) Representative: Winter, Brandl - Partnerschaft mbB

(57) **Abstract**

A negative electrode layer (2) contains first composite particles and second composite particles, and the first composite particles and the second composite particles each contain a Si-based active material and a binder. The first composite particle has, in a cross-sectional shape of the first composite particle, an outer edge region (α) including an outer edge (E) and an internal region (β) located inward of the outer edge region (α). The second composite particle has, in a cross-sectional shape of the second composite particle, an outer edge region (α) including an outer edge (E) and an internal region (β) located inward of the outer edge region (α). The negative electrode layer (2) meets a predetermined condition.

## Description

### BACKGROUND OF THE INVENTION

### 1. Field of the Invention

The present disclosure relates to a battery and a battery manufacturing method.

### 2. Description of Related Art

In recent years, development of batteries has been vigorously conducted. In the automaking industry, for example, development of batteries used for battery electric vehicles (BEVs), plug-in hybrid electric vehicles (PHEVs), and hybrid electric vehicles (HEVs) has been pursued. A battery usually has a positive electrode layer, a negative electrode layer, and an electrolyte layer disposed between the positive electrode layer and the negative electrode layer. As an electrode active material, an active material containing a Si element (Si-based active material) is known.

For example, Japanese Unexamined Patent Application Publication No. 2019-121557 (JP 2019-121557 A) discloses a negative electrode layer that has a negative electrode active material and a sulfide solid electrolyte, wherein the negative electrode active material is a composite particle having a plurality of particles including a Si element or a Sn element, and a binder, with a voidage of 15% or lower. Further, Japanese Unexamined Patent Application Publication No. 2024-017879 (JP 2024-017879 A) discloses a composite particle containing Si and resin.

### SUMMARY OF THE INVENTION

While a Si-based active material is a high-capacity negative electrode active material, it changes significantly in volume in accordance with charge and discharge. When the volume changes significantly in accordance with charge and discharge, the negative electrode layer may peel off adjacent members, such as an electrolyte layer and a negative electrode current collector. In this respect, consideration has been given to combining a Si-based active material and a binder to thereby absorb expansion and contraction of the Si-based active material by the binder and inhibit the change in volume of the negative electrode layer. However, there is room for improvement in inhibiting the negative electrode layer from peeling.

The present disclosure has been made in view of these circumstances to provide a battery in which the negative electrode layer is inhibited from peeling.

A battery according to a first aspect of the present disclosure including a negative electrode current collector, a negative electrode layer, an electrolyte layer, a positive electrode layer, and a positive electrode current collector. The negative electrode current collector, the negative electrode layer, the electrolyte layer, the positive electrode layer, and the positive electrode current collector are stacked in the order of the negative electrode current collector, the negative electrode layer, the electrolyte layer, the positive electrode layer, and the positive electrode current collector in a thickness direction. The negative electrode layer contains first composite particles and second composite particles. The first composite particles and the second composite particles each contain a Si-based active material and a binder. The first composite particle has, in a cross-sectional shape of the first composite particle, an outer edge region including an outer edge and an internal region located inward of the outer edge region. The second composite particle has, in a cross-sectional shape of the second composite particle, an outer edge region including an outer edge and an internal region located inward of the outer edge region. In a case where a proportion of the binder in the outer edge region of the first composite particle is X1, a proportion of the binder in the internal region of the first composite particle is X2, a proportion of the binder in the outer edge region of the second composite particle is Y1, and a proportion of the binder in the internal region of the second composite particle is Y2, the X1 and the X2 meet 1.2 ≤ (X1/X2) and the Y1 and the Y2 meet (Y1/Y2) < 1.2. The negative electrode layer meets one of a first condition, a second condition, and a third condition in a case where the X1 and the X2 meet 1.2 ≤ (X1/X2), the Y1 and the Y2 meet (Y1/Y2) < 1.2, and, with a thickness of the negative electrode layer being T and in the thickness direction, a region of the negative electrode layer located at a distance of 0 T or longer and 0.2 T or shorter from an end portion of the negative electrode layer on a side of the negative electrode current collector is a first region, a region of the negative electrode layer located at a distance of 0.4 T or longer and 0.6 T or shorter from the end portion is a second region, and a region of the negative electrode layer located at a distance of 0.8 T or longer and 1.0 T or shorter from the end portion is a third region. The first condition is that in the first region, a content of the first composite particles is higher than a content of the second composite particles, and that in the third region, a content of the second composite particles is higher than a content of the first composite particles. The second condition is that in the first region, a content of the second composite particles is higher than a content of the first composite particles, and that in the third region, a content of the first composite particles is higher than a content of the second composite particles. The third condition is that in the first region, a content of the first composite particles is higher than a content of the second composite particles, that in the second region, a content of the second composite particles is higher than a content of the first composite particles, and that in the third region, a content of the first composite particles is higher than a content of the second composite particles. The content of the first composite particles is 0 or higher. The content of the second composite particles is 0 or higher.

In the battery according to the first aspect of the present disclosure, the X1 and the X2 may meet (X1/X2) ≤ 3.6.

In the battery according to the first aspect of the present disclosure, the Y1 and the Y2 may meet (Y1/Y2) ≤ 1.0.

In the battery according to the first aspect of the present disclosure, the T may be 30 µm or larger and 1000 µm or smaller.

In the battery according to the first aspect of the present disclosure, the electrolyte layer may contain a solid electrolyte.

In the battery according to the first aspect of the present disclosure, the electrolyte layer may contain a sulfide solid electrolyte as the solid electrolyte.

In the battery according to the first aspect of the present disclosure, the Si-based active material may be a porous particle.

In the battery according to the first aspect of the present disclosure, the battery may be a solid-state battery.

In the battery according to the first aspect of the present disclosure, the content of the first composite particles may be 30 weight% or higher and 60 weight% or lower, the content of the second composite particles may be 30 weight% or higher and 60 weight% or lower, and a total of the content of the first composite particles and the content of the second composite particles may be 60 weight% or higher and 90 weight% or lower.

In the battery according to the first aspect of the present disclosure, the Y1 and the Y2 may meet 0.6 ≤ (Y1/Y2).

A manufacturing method of the above-described battery according to a second aspect of the present disclosure that manufactures the battery may include preparing a first negative electrode composite material containing the first composite particles and a second negative electrode composite material containing the second composite particles, forming a first negative electrode layer using the first negative electrode composite material, and forming a second negative electrode layer on the first negative electrode layer using the second negative electrode composite material.

The manufacturing method according to the second aspect of the present disclosure may include forming a third negative electrode layer on the second negative electrode layer using a third negative electrode composite material containing the first composite particles.

The present disclosure has the advantage of being able to provide a battery in which the negative electrode layer is inhibited from peeling.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view illustrating a battery in the present disclosure;
FIG. 2A is a schematic sectional view illustrating a first composite particle and a second composite particle in the present disclosure;
FIG. 2B is a partially enlarged view of FIG. 2A;
FIG. 3 is a schematic sectional view illustrating a negative electrode layer in the present disclosure;
FIG. 4 is a schematic sectional view illustrating a battery the negative electrode layer of which meets condition (i);
FIG. 5 is a schematic sectional view illustrating a battery the negative electrode layer of which meets condition (ii);
FIG. 6 is a schematic sectional view illustrating a battery the negative electrode layer of which meets condition (iii);
FIG. 7 is a flowchart illustrating a battery manufacturing method in the present disclosure; and
FIG. 8 is a schematic sectional view illustrating a negative electrode layer produced in Comparative Example 1.

### DETAILED DESCRIPTION OF EMBODIMENTS

In the following, a battery and a battery manufacturing method in the present disclosure will be described in detail. Drawings to be shown in the following are schematically depicted, with the sizes and the shapes of parts exaggerated as necessary to facilitate understanding.

### A. Battery

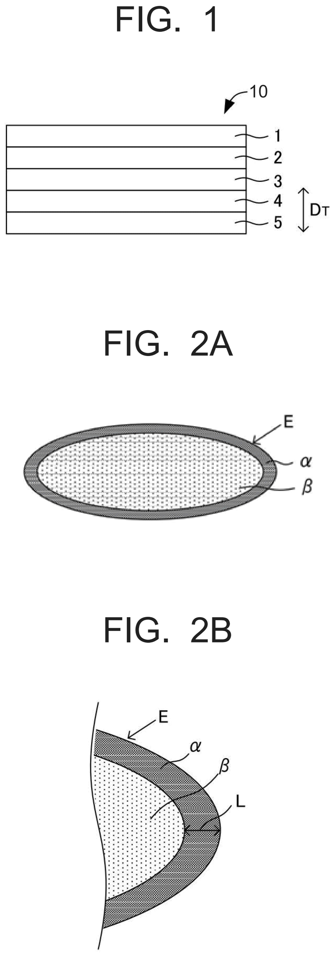

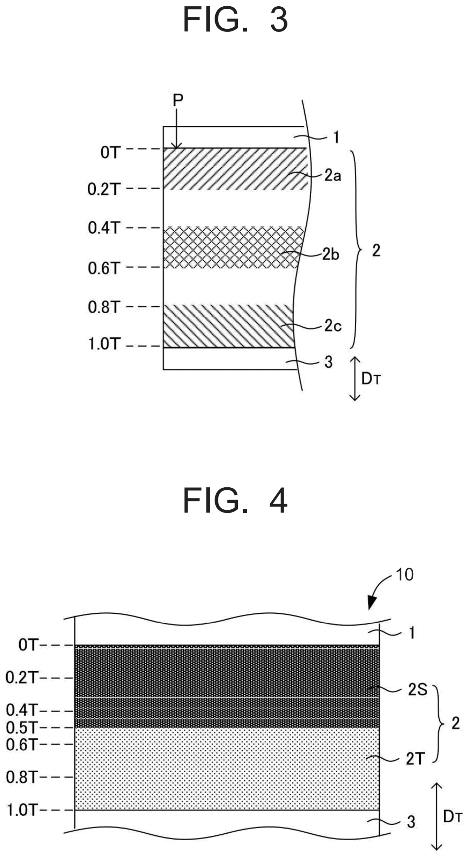

FIG. 1 is a schematic sectional view illustrating the battery in the present disclosure, and FIG. 2A and FIG. 2B are schematic sectional views illustrating a first composite particle and a second composite particle in the present disclosure. FIG. 2B is a partially enlarged view that is a close-up of a right-side portion of FIG. 2A. FIG. 3 is a schematic sectional view illustrating a negative electrode layer in the present disclosure. As shown in FIG. 1, a battery 10 has a negative electrode current collector 1, a negative electrode layer 2, an electrolyte layer 3, a positive electrode layer 4, and a positive electrode current collector 5 in this order in a thickness direction D_{T}. The negative electrode layer 2 contains the first composite particles and the second composite particles, and the first composite particles and the second composite particles each contain a Si-based active material and a binder.

As shown in FIG. 2A and FIG. 2B, the first composite particle and the second composite particle each have, in their cross-sectional shape, an outer edge region α including an outer edge E and an internal region β located inward of the outer edge region α. That is, the first composite particle has, in the cross-sectional shape of the first composite particle, the outer edge region α including the outer edge E and the internal region β located inward of the outer edge region α, and the second composite particle has, in the cross-sectional shape of the second composite particle, the outer edge region α including the outer edge E and the internal region β located inward of the outer edge region α. When a proportion of the binder present in the outer edge region α of the first composite particle is X1, a proportion of the binder in the internal region β of the first composite particle is X2, a proportion of the binder present in the outer edge region α of the second composite particle is Y1, and a proportion of the binder in the internal region β of the second composite particle is Y2, the X1 and the X2 meet 1.2 ≤ (X1/X2) and the Y1 and the Y2 meet (Y1/Y2) < 1.2.

Further, as shown in FIG. 3, with the thickness of the negative electrode layer 2 being T, in the thickness direction D_{T}, a region of the negative electrode layer 2 located at a distance of 0 T or longer and 0.2 T or shorter from an end portion P of the negative electrode layer 2 on the side of the negative electrode current collector 1 is a first region 2a, a region of the negative electrode layer 2 located at a distance of 0.4 T or longer and 0.6 T or shorter is a second region 2b, and a region of the negative electrode layer 2 located at a distance of 0.8 T or longer and 1.0 T or shorter is a third region 2c. In this case, the negative electrode layer 2 meets one of the following conditions (i), (ii), and (iii). Conditions (i), (ii), and (iii) may be termed as a first condition, a second condition, and a third condition, respectively.

### Condition (i)

In the first region 2a, the content of the first composite particles is higher than the content (including 0) of the second composite particles, and in the third region 2c, the content of the second composite particles is higher than the content (including 0) of the first composite particles.

### Condition (ii)

In the first region 2a, the content of the second composite particles is higher than the content (including 0) of the first composite particles, and in the third region 2c, the content of the first composite particles is higher than the content (including 0) of the second composite particles.

### Condition (iii)

In the first region 2a, the content of the first composite particles is higher than the content (including 0) of the second composite particles, in the second region 2b, the content of the second composite particles is higher than the content (including 0) of the first composite particles, and in the third region 2c, the content of the first composite particles is higher than the content (including 0) of the second composite particles.

According to the present disclosure, the negative electrode layer contains the predetermined first composite particles and second composite particles and meets one of the above-described conditions (i) to (iii). Thus, in the battery, the negative electrode layer is inhibited from peeling. The content of the first composite particles may be 0 or higher, and the content of the second composite particles may be 0 or higher.

As will be described in detail later, in the first composite particle, the binder is present disproportionately near the outer edge compared with that in the second composite particle. Accordingly, the first composite particle has good adhesiveness compared with the second composite particle. Further, as will be described in detail later, when one of the above-described conditions (i) to (iii) is met, as shown in FIGS. 4 to 6, in the negative electrode layer, the first composite particles are present in a larger number than the second composite particles on at least either the negative electrode current collector side or the electrolyte layer side. With the negative electrode layer thus having good adhesiveness to adjacent members, the negative electrode layer is inhibited from peeling in the battery of the present disclosure.

Here, it is conceivable that peeling of the negative electrode layer itself can be inhibited also by increasing the strength or the size of a restraining member. On the other hand, increasing the size of the restraining member results in reduced energy density of the battery. By contrast, in the battery of the present disclosure, the negative electrode layer can be inhibited from peeling by adjusting the arrangement of the first composite particles having good adhesiveness, which offers an advantage in terms of energy density as well.

### 1. Negative Electrode Layer

### 1.1 Materials of Negative Electrode Layer

### First Composite Particle and Second Composite Particle

The negative electrode layer in the present disclosure contains the first composite particles and the second composite particles. The first composite particles and the second composite particles both function as a negative electrode active material in the negative electrode layer. Here, in the present disclosure, when simply "composite particle" is mentioned, this refers to both the first composite particle and the second composite particle.

As shown in FIG. 2A and FIG. 2B, the composite particle in the present disclosure has, in its cross-sectional shape, the outer edge region α including the outer edge E and the internal region β located inward of the outer edge region α. In the present disclosure, the outer edge region α is a portion of the composite particle within a length L from the outer edge E. The internal region β is a portion of the composite particle located at a longer distance than the length L from the outer edge E.

Here, when the mean particle diameter (D₅₀) of the composite particle is L_{D}, the length L meets L/L_{D} = 0.2. Thus, the length L is determined based on the mean particle diameter L_{D} of the composite particle. Therefore, while the specific numerical value of the length L is not particularly limited, it is, for example, 2 µm or larger and 20 µm or smaller. The mean particle diameter L_{D} (D₅₀) of the composite particle will be described later.

In the first composite particle and the second composite particle, the proportion of the binder in the outer edge region and the proportion of the binder in the internal region each meet a predetermined relationship.

In the first composite particle, the proportion X1 of the binder in the outer edge region and the proportion X2 of the binder in the internal region meet 1.2 ≤ (X1/X2). In the first composite particle, the binder is present disproportionately near the outer edge compared with that in the second composite particle to be described later. (X1/X2) may be 1.3 or higher, 1.5 or higher, 1.7 or higher, 2.0 or higher, 2.3 or higher, or 2.5 or higher. While the upper limit of (X1/X2) is not particularly limited, it is 4.8 or lower, for example, and may be 4.0 or lower, 3.8 or lower, 3.6 or lower, 3.3 or lower, 3.1 or lower, 2.8 or lower, or 2.5 or lower. When (X1/X2) is too high, i.e., when the binder is present too disproportionately in the outer edge region, the reaction of the Si-based active material inside the first composite particle may be hindered by the binder. In that case, the reaction concentrates in the second composite particle to be described later and the second composite particle deteriorates due to repeated charge and discharge, which may result in a decrease in the capacity maintaining ratio of the battery.

In the second composite particle, the proportion Y1 of the binder in the outer edge region and the proportion Y2 of the binder in the internal region meet (Y1/Y2) < 1.2. (Y1/Y2) may be 1.1 or lower or may be 1.0 or lower. On the other hand, (Y1/Y2) is 0.6 or higher, for example, and may be 0.8 or higher or may be 0.9 or higher.

The proportion of the binder can be determined, for example, from observation of a cross-section of the negative electrode layer under a scanning electron microscope (SEM) as follows. First, cross-section exposing processing is performed on the negative electrode layer by the ion milling method, for example, to acquire a cross-sectional image of the composite particle. An EDX mapping analysis is performed on the acquired cross-sectional image to distinguish the Si-based active material portion and the binder portion from each other. Then, the proportion of the binder can be measured by determining the area of the binder portion in each of the outer edge region and the internal region described above. The proportion of the binder can also be measured by dyeing the binder in a cross-section of the composite particle using osmium oxide (OsO₄) and determining the area of the dyed portion in each of the outer edge region and the internal region. Thus, the proportion of the binder in the present disclosure can be regarded as the area proportion of the binder. More specifically, the X1 and the Y1 can be regarded as the proportion of the area of the binder in the outer edge region to the area of the outer edge region. Further, the X2 and the Y2 can be regarded as the proportion of the area of the binder in the internal region to the area of the internal region.

For each of the first composite particle and the second composite particle, it is preferable that the proportion of the binder be a mean value obtained by measuring a plurality of samples (particles). The number of the samples is 10 or more, for example, and may be 20 or more, 50 or more, or 100 or more. It is preferable that the observation field of view of the SEM image in the measurement of the proportion of the binder be a field of view including a number of composite particles not smaller than the aforementioned numbers. The observation field of view is, for example, 1000 µm² or larger and 50000 µm² or smaller.

The composite particle in the present disclosure contains a Si-based active material.

Examples of Si-based active materials include Si as a single element, Si alloys, and Si oxides. Examples of Si alloys include Si-Al-based alloys, Si-Sn-based alloys, Si-In-based alloys, Si-Ag-based alloys, Si-Pb-based alloys, Si-Sb-based alloys, Si-Bi-based alloys, Si-Mg-based alloys, Si-Ca-based alloys, Si-Ge-based alloys, and Si-Pb-based alloys. The Si alloy may be a two-component-based alloy or may be a multicomponent-based alloy composed of three or more components. It is preferable that the Si alloy contain a Si element as the main component. One example of Si oxides is SiO.

The Si-based active material may be a primary particle or may be a secondary particle that is an aggregate of primary particles. The Si-based active material may be a solid particle, or may be a porous particle (porous Si) having a void in its inside, particularly inside a primary particle. The void inside the primary particle can be identified by observation under a scanning electron microscope (SEM). While the voidage of the primary particle is not particularly limited, it is 4% or higher, for example, and may be 10% or higher. The voidage is 40% or lower, for example, and may be 20% or lower. For example, the voidage can be determined by the following procedure. First, a cross-sectional image of the Si-based active material is acquired by an SEM. From the acquired image, the silicon portion and the void portion are discriminated from each other and binarized using image analysis software. The areas of the silicon portion and the void portion are determined, and the voidage (%) is calculated from the following formula: Voidage (%) = 100 × (area of void portion)/((area of silicon portion) + (area of void portion))

While the mean pore diameter in the primary particle (porous Si) is not particularly limited, it is, for example, 10 nm or larger and 100 nm or smaller. In the primary particle, the void volume of voids the pore diameter of which is 50 nm or smaller is, for example, 0.05 cc/g or higher and 0.30 cc/g or lower.

Examples of production methods of the porous Si include a method of producing an alloy of Li and Si (Li-Si alloy) and then removing Li from the Li-Si alloy. For example, the Li-Si alloy is obtained by mixing Li and Si together. One example of methods for removing Li from the Li-Si alloy is a method of reacting the Li-Si alloy with a Li extraction material. Examples of Li extraction materials include alcohols such as methanol and acids such as acetic acid.

The Si-based active material may be crystalline or may be amorphous. When it is crystalline, the Si-based active material usually has a Si crystal phase. One example of Si crystal phases is a diamond-type crystal phase. A common Si contains a diamond-type crystal phase as the Si-crystal phase. The Si-based active material may contain a diamond-type crystal phase as the main phase of the Si crystal phase.

Another example of Si crystal phases is a silicon clathrate-type crystal phase. The silicon clathrate-type crystal phase may be a silicon clathrate I-type crystal phase or may be a silicon clathrate II-type crystal phase. In the silicon clathrate-type crystal phase, a plurality of Si elements composes a polyhedron (cage) including a pentagon or a hexagon. This polyhedron has in its inside a space that can envelop a metal ion, such as a Li ion. As a metal ion is inserted into this space, a change in volume due to charge and discharge can be further inhibited. The Si-based active material may contain, as the main phase of the Si crystal phase, a silicon clathrate I-type crystal phase or a silicon clathrate II-type crystal phase.

The proportion (content) of the Si-based active material in each of the first composite particle and the second composite particle is, for example, 70 weight% or higher and 95 weight% or lower.

The composite particle in the present disclosure contains a binder.

The type of the binder in the composite particle is not particularly limited. Examples of binders include rubber-based binders such as butadiene rubber (BR) and styrene-butadiene rubber (SBR), and fluoride-based binders such as polyvinylidene fluoride (PVdF). The composite particle may contain one type of binder or may contain two or more types of binders. The type of the binder may be the same in the first composite particle and the second composite particle, or may be different therebetween.

While the content of the binder in the composite particle is not particularly limited, it is, for example, 1 weight% or higher and 30 weight% or lower.

The composite particle in the present disclosure is a particle into which a plurality of particles of the above-described Si-based active material has aggregated along with the binder. The number of particles of the Si-based active material included in the composite particle is, for example 10 or more and 100 or less. While the mean particle diameter (D₅₀) of the composite particle is not particularly limited, it is, for example, 10 µm or larger and 100 µm or smaller. The mean particle diameter (D₅₀) refers to a particle diameter corresponding to a cumulative frequency of 50% in a particle diameter distribution. The mean particle diameter may be a value measured by a laser diffraction scattering-type particle size distribution measurement method, or may be a value measured by an image analysis using software.

While the total proportion of the first composite particles and the second composite particles (the content of the composite particles) in the negative electrode layer is not particularly limited, it is, for example, 60 weight% or higher and 90 weight% or lower. If the content of the composite particles is too low, a sufficient battery capacity may fail to be obtained. On the other hand, if the content of the composite particles is too high, sufficient electron conductivity and ion conductivity may fail to be obtained. In the negative electrode layer, the content of the first composite particles is, for example, 30 weight% or higher and 60 weight% or lower, and the content of the second composite particles is, for example, 30 weight% or higher and 60 weight% or lower.

While the production method of the composite particles is not particularly limited, one example is a spray dry method. The spray dry method is a method that sprays a slurry containing the above-described Si-based active material and binder and a dispersion medium into a hot wind and thereby dries the slurry. The above-described proportions of the binder (X1, X2, Y1, and Y2) can be controlled by adjusting the NV value of the slurry and the conditions of the spray dry method, such as the drying temperature and the slurry feed rate. For example, raising the NV value of the slurry can adjust the binder toward being more disproportionately present inside the particle. Raising the spray pressure can adjust the binder toward being further dispersed inside the particle. Raising the slurry feed rate can adjust the binder toward being further dispersed inside the particle.

The NV value of the slurry at which the first composite particle can be produced is, for example, 15% or higher and 30% or lower. The NV value (Non-Volatile content) in the present disclosure refers to the weight proportion of a non-volatile component (solid component) included in the slurry. The drying temperature at which the first composite particle can be produced is, for example, 180°C or higher and 200°C or lower. The slurry feed rate at which the first composite particle can be produced is, for example, 100 g/hour or higher and 200 g/hour or lower.

The NV value of the slurry at which the second composite particle can be produced is, for example, 5% or higher and 15% or lower. The drying temperature at which the second composite particle can be produced is, for example, 120°C or higher and 140°C or lower. The slurry feed rate at which the second composite particle can be produced is, for example, 400 g/hour or higher and 600 g/hour or lower.

### Other Materials

In addition to the above-described first composite particles and second composite particles, the negative electrode layer may contain at least one of a conductive agent, a binder, and an electrolyte.

Examples of conductive agents include carbon materials, metal particles, and electrically conductive polymers. Examples of carbon materials include particulate carbon materials such as acetylene black (AB) and Ketjen Black (KB), and fibrous carbon materials such as carbon fiber, carbon nanotube (CNT), and carbon nanofiber (CNF). The proportion of the conductive agent in the negative electrode layer is, for example, 0.1 weight% or higher and 10 weight% or lower.

As for the type of the binder, the same binders as in the above-described composite particle can be named as examples. The proportion of the binder in the negative electrode layer (excluding the binder in the composite particle) is not particularly limited, and is, for example, 1 weight% or higher and 10 weight% or lower.

The type of the electrolyte will be described in "3. Electrolyte Layer." The proportion of the electrolyte in the negative electrode layer is, for example, 10 weight% or higher and 60 weight% or lower.

### 1.2 Aspects of Negative Electrode Layer

As shown in FIG. 3, with the thickness of the negative electrode layer 2 being T, in the thickness direction D_{T}, the region of the negative electrode layer 2 located at a distance of 0 T or longer and 0.2 T or shorter from the end portion P of the negative electrode layer 2 on the side of the negative electrode current collector 1 is the first region 2a, the region of the negative electrode layer 2 located at a distance of 0.4 T or longer and 0.6 T or shorter is the second region 2b, and the region of the negative electrode layer 2 located at a distance of 0.8 T or longer and 1.0 T or shorter is the third region 2c. The position at the distance 0 T can be regarded as the position of an interface between the negative electrode current collector 1 and the negative electrode layer 2, and the position of the distance 1.0 T can be regarded as the position of an interface between the negative electrode layer 2 and the electrolyte layer 3.

There are roughly three aspects of the negative electrode layer in the present disclosure based on the relationship (condition) between the content of the first composite particles and the content of the second composite particles in the aforementioned regions. Here, the content of the first composite particles may be the weight. The content of the first composite particles may be the area of the particles or the number of the particles that is observed from a cross-sectional SEM image for each region. The same applies to the content of the second composite particles.

The negative electrode layer in the present disclosure may meet the following condition (i).

### Condition (i)

In the first region, the content of the first composite particles is higher than the content (including 0) of the second composite particles, and in the third region, the content of the second composite particles is higher than the content (including 0) of the first composite particles.

In condition (i), in the first region, the proportion of the content of the first composite particles to a total of the content of the first composite particles and the content of the second composite particles is usually 0.51 or higher, and may be 0.60 or higher, 0.70 or higher, 0.80 or higher, or 0.90 or higher. This proportion in the first region is usually 1 or lower, and may be 0.99 or lower or 0.95 or lower.

In condition (i), in the third region, the proportion of the content of the second composite particles to a total of the content of the first composite particles and the content of the second composite particles is usually 0.51 or higher, and may be 0.60 or higher, 0.70 or higher, 0.80 or higher, or 0.90 or higher. This proportion in the third region is usually 1 or lower, and may be 0.99 or lower or 0.95 or lower.

One example of the battery the negative electrode layer of which meets condition (i) will be described using FIG. 4. The battery 10 shown in FIG. 4 has the negative electrode current collector 1, a first negative electrode layer 2S that contains only the first composite particles as the negative electrode active material, a second negative electrode layer 2T that contains only the second composite particles as the negative electrode active material, and the electrolyte layer 3 in this order in the thickness direction D_{T}. The first negative electrode layer 2S and the second negative electrode layer 2T compose the negative electrode layer 2. The thickness of each of the first negative electrode layer 2S and the second negative electrode layer 2T is 0.5 T. As the first region (the region located at a distance of 0 T or longer and 0.2 T or shorter) is part of the first negative electrode layer 2S, the first region does not contain the second composite particles. That is, in the first region, the proportion of the first composite particles to the total amount of the first composite particles and the second composite particles is 1. Thus, in the first region, the content of the first composite particles is higher than the content of the second composite particles. As the third region (the region located at a distance of 0.8 T or longer and 1.0 T or shorter) is part of the second negative electrode layer 2T, the third region does not contain the first composite particles. That is, in the third region, the proportion of the second composite particles to the total amount of the first composite particles and the second composite particles is 1. Thus, in the third region, the content of the second composite particles is higher than the content of the first composite particles.

In condition (i), the relationship between the content of the first composite particles and the content of the second composite particles in the second region (the region located at a distance of 0.4 T or longer and 0.6 T or shorter) is not particularly limited. For example, in the battery 10 shown in FIG. 4, the second region includes part of the first negative electrode layer 2S and part of the second negative electrode layer 2T. In this case, if the contents of the composite particles in the first negative electrode layer 2S and the second negative electrode layer 2T are the same, the content of the first composite particles and the content of the second composite particles in the second region are the same. On the other hand, when, in FIG. 4, the thickness of the first negative electrode layer 2S is 0.3 T and the thickness of the second negative electrode layer 2T is 0.7 T, since the second region is part of the second negative electrode layer 2T, the content of the second composite particles is higher than the content of the first composite particles in the second region.

The negative electrode layer in the present disclosure may meet the following condition (ii).

### Condition (ii)

In the first region, the content of the second composite particles is higher than the content (including 0) of the first composite particles, and in the third region, the content of the first composite particles is higher than the content (including 0) of the second composite particles.

In condition (ii), in the first region, the proportion of the content of the second composite particles to a total of the content of the first composite particles and the content of the second composite particles is usually 0.51 or higher, and may be 0.60 or higher, 0.70 or higher, 0.80 or higher, or 0.90 or higher. This proportion in the first region is usually 1 or lower, and may be 0.99 or lower or 0.95 or lower.

In condition (ii), in the third region, the proportion of the content of the first composite particles to a total of the content of the first composite particles and the content of the second composite particles is usually 0.51 or higher, and may be 0.60 or higher, 0.70 or higher, 0.80 or higher, or 0.90 or higher. This proportion in the third region is usually 1 or lower, and may be 0.99 or lower or 0.95 or lower.

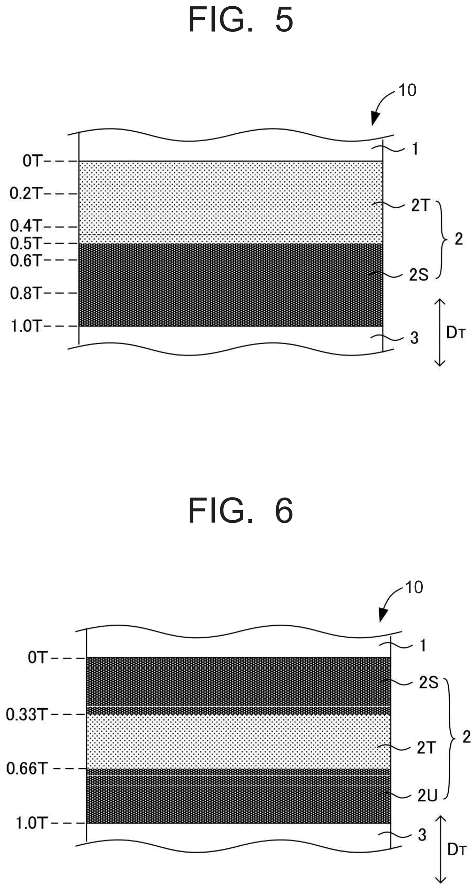

One example of the battery the negative electrode layer of which meets condition (ii) will be described using FIG. 5. The battery 10 shown in FIG. 5 has the negative electrode current collector 1, the second negative electrode layer 2T that contains only the second composite particles as the negative electrode active material, the first negative electrode layer 2S that contains only the first composite particles as the negative electrode active material, and the electrolyte layer 3 in this order in the thickness direction D_{T}. As in FIG. 4, the first negative electrode layer 2S and the second negative electrode layer 2T compose the negative electrode layer 2, and the thickness of each of the first negative electrode layer 2S and the second negative electrode layer 2T is 0.5 T. As the first region (the region located at a distance of 0 T or longer and 0.2 T or shorter) is part of the second negative electrode layer 2T, the first region does not contain the first composite particles. Thus, in the first region, the content of the second composite particles is higher than the content of the first composite particles. As the third region (the region located at a distance of 0.8 T or longer and 1.0 T or shorter) is part of the first negative electrode layer 2S, the third region does not contain the second composite particles. Thus, in the third region, the content of the first composite particles is higher than the content of the second composite particles.

As in condition (i) described above, also in condition (ii), the relationship between the content of the first composite particles and the content of the second composite particles in the second region (the region located at a distance of 0.4 T or longer and 0.6 T or shorter) is not particularly limited.

The negative electrode layer in the present disclosure may meet the following condition (iii).

### Condition (iii)

In the first region, the content of the first composite particles is higher than the content (including 0) of the second composite particles, in the second region, the content of the second composite particles is higher than the content (including 0) of the first composite particles, and in the third region, the content of the first composite particles is higher than the content (including 0) of the second composite particles.

In condition (iii), the relationship between the content of the first composite particles and the content of the second composite particles in the first region and the third region are the same as in the first region in the above-described condition (i). Further, in condition (iii), the relationship between the content of the first composite particles and the content of the second composite particles in the second region is the same as in the third region in the above-described condition (i).

One example of the battery the negative electrode layer of which meets condition (iii) will be described using FIG. 6. The battery 10 shown in FIG. 6 has the negative electrode current collector 1, the first negative electrode layer 2S that contains only the first composite particles as the negative electrode active material, the second negative electrode layer 2T that contains only the second composite particles as the negative electrode active material, a third negative electrode layer 2U that contains only the first composite particles as the negative electrode active material, and the electrolyte layer 3 in this order in the thickness direction D_{T}. The first negative electrode layer 2S, the second negative electrode layer 2T, and the third negative electrode layer 2U compose the negative electrode layer 2. The thickness of each of the first negative electrode layer 2S, the second negative electrode layer 2T, and the third negative electrode layer 2U is 0.33 T (1/3 T). As the first region (the region located at a distance of 0 T or longer and 0.2 T or shorter) is part of the first negative electrode layer 2S, the first region does not contain the second composite particles. Thus, in the first region, the content of the first composite particles is higher than the content of the second composite particles. As the second region (the region located at a distance of 0.4 T or longer and 0.6 T or shorter) is part of the second negative electrode layer 2T, the second region does not contain the first composite particles. Thus, in the second region, the content of the second composite particles is higher than the content of the first composite particles. As the third region (the region located at a distance of 0.8 T or longer and 1.0 T or shorter) is part of the third negative electrode layer 2U, the third region does not contain the second composite particles. Thus, in the third region, the content of the first composite particles is higher than the content of the second composite particles.

In regions of the negative electrode layer other than the first region to the third region described above, the relationship between the content of the first composite particles and the content of the second composite particles is not particularly limited. When a region located at a distance longer than 0.2 T and shorter than 0.4 T from the end portion of the negative electrode layer on the negative electrode current collector side is a fourth region and a region located at a distance longer than 0.6 T and shorter than 0.8 T is a fifth region, in each of the fourth region and the fifth region, the content of the first composite particles may be lower than, equal to, or higher than the content of the second composite particles. That the contents are equal means that the absolute value of the difference between the two contents is smaller than 0.1. For example, in FIG. 4, the content of the first composite particles is higher than the content of the second composite particles in the fourth region of the negative electrode layer 2. Further, in FIG. 4, the content of the second composite particles is higher than the content of the first composite particles in the fifth region of the negative electrode layer 2.

Here, the above-described batteries in which the negative electrode layers have multilayer structures as shown in FIG. 4 to FIG. 6 have been presented as examples, and the battery in the present disclosure is not limited to them. For example, the negative electrode layer may be a so-called concentration gradient layer which has a single-layer structure, and in which the content of the first composite particles and the content of the second composite particles vary continuously in the thickness direction so as to meet one of the above-described conditions (i) to (iii).

While the thickness (T) of the negative electrode layer is not particularly limited, it is, for example, 30 µm or larger, and may be 50 µm or larger or 100 µm or larger. On the other hand, the thickness of the negative electrode layer is, for example, 1000 µm or smaller, and may be 800 µm or smaller, 500 µm or smaller, 300 µm or smaller, or 100 µm or smaller.

### 2. Positive Electrode Layer

The positive electrode layer contains at least a positive electrode active material. The positive electrode layer may contain at least one of a conductive agent, a binder, and an electrolyte as necessary.

Examples of positive electrode active materials include oxide active materials. Examples of oxide active materials include bedded salt-type active materials such as LiCoO₂, LiNi_{1/3}Co_{1/3}Mn_{1/3}O₂, and LiNi_{0.8}Co_{0.15}Al_{0.05}O₂, spinel-type active materials such as LiMn₂O₄ and Li₄Ti₅O₁₂, and olivine-type active materials such as LiFePO₄.

A coat layer containing a Li ion-conducting oxide may be formed on a surface of the oxide active material. This is because the reaction between the oxide active material and a solid electrolyte (particularly, a sulfide solid electrolyte) can be inhibited. Examples of Li ion-conducting oxides include LiNbO₃, Li₄Ti₅O₁₂, and Li₃PO₄.

The shape of the positive electrode active material is, for example, a particulate shape. The mean particle diameter D₅₀ of the positive electrode active material is, for example, 0.5 µm or larger and 50 µm or smaller. The mean particle diameter (D₅₀) is as described above.

Examples of conductive agents include carbon materials, metal particles, and electrically conductive polymers. Examples of carbon materials include particulate carbon materials such as acetylene black (AB) and Ketjen Black (KB), and fibrous carbon materials such as vapor-grown carbon fiber (VGCF), carbon nanotube (CNT), and carbon nanofiber (CNF). As for the binder and the solid electrolyte, what has been described in "1. Negative Electrode Layer" applies.

While the thickness of the positive electrode layer is not particularly limited, it is, for example, 1 µm or larger and 1000 µm or smaller.

### 3. Electrolyte Layer

The electrolyte layer is a layer disposed between the positive electrode layer and the negative electrode layer and contains at least an electrolyte. While the electrolyte layer may contain a solid electrolyte or a liquid electrolyte (electrolytic solution), the former is preferable. An electrolyte layer containing a solid electrolyte is referred to as a "solid electrolyte layer." Generally, a battery having a solid electrolyte layer is referred to as a "solid-state battery." The solid-state battery may be a semi-solid-state battery or may be an all-solid-state battery. A battery including a solid electrolyte layer that contains only an inorganic solid electrolyte as the solid electrolyte is classified as an all-solid-state battery.

Examples of solid electrolytes include inorganic solid electrolytes such as sulfide solid electrolytes, oxide solid electrolytes, nitride solid electrolytes, halide solid electrolytes, and complex hydrides. Among them, particularly sulfide solid electrolytes are preferable. This is because they have high ion conductivity. A sulfide solid electrolyte usually contains sulfur (S) as the main component of an anion element. An oxide solid electrolyte, a nitride solid electrolyte, and a halide solid electrolyte usually contain oxygen (O), nitrogen (N), and halogen (X), respectively, as the main component of an anion element.

It is preferable that the sulfide solid electrolyte contain, for example, a Li element, an X element (X is at least one type among P, As, Sb, Si, Ge, Sn, B, Al, Ga, and In), and a S element. The sulfide solid electrolyte may further contain at least one of an O element and a halogen element.

Examples of sulfide solid electrolytes include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₃-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, and Li₂S-SiS₂-LiₓMO_{y} (where x and y are positive numbers, and M is one of P, Si, Ge, B, Al, Ga, and In).

Other examples of solid electrolytes include organic solid electrolytes such as polymer electrolytes and gel electrolytes.

The solid electrolyte may be glassy and may have a crystal phase. Examples of crystal phases include a Thio-LISICON-type crystal phase, an argyrodite-type crystal phase, and an LGPS-type crystal phase. The shape of the solid electrolyte is, for example, a particulate shape. The mean particle diameter of the solid electrolyte is, for example, 0.01 µm or larger and 10 µm or smaller. The ion conductance of the solid electrolyte at 25°C is, for example, 1 × 10⁻⁴ S/cm or higher, and may be 1 × 10⁻³ S/cm or higher.

Further, the electrolyte layer may contain a binder as necessary. As examples of binders, the binders described in "1. Negative Electrode Layer" can be named. While the thickness of the solid electrolyte layer is not particularly limited, it is, for example, 1 µm or larger and 1000 µm or smaller.

### 4. Negative Electrode Current Collector and Positive Electrode Current Collector

The negative electrode current collector is a member that collects a current of electrons in the negative electrode layer, and the positive electrode current collector is a member that collects a current of electrons in the negative electrode layer. Examples of the material of the positive electrode current collector include SUS, aluminum, nickel, iron, titanium, and carbon. Examples of the material of the negative electrode current collector include SUS, copper, nickel, and carbon. A coat layer containing at least one of Ni, Cr, and C may be formed on surfaces of the positive electrode current collector and the negative electrode current collector. The coat layer may be a plated layer or may be a vapor-deposited layer. One example of the shape of the positive electrode current collector and the negative electrode current collector is a foil shape.

### 5. Battery

The battery in the present disclosure may include an outer package that houses the above-described members. Examples of outer packages include a laminate-type outer package and a case-type outer package. The battery in the present disclosure may include a restraining jig that applies a restraining pressure to the above-described members in the thickness direction. As the restraining jig, a commonly known jig can be used. The restraining pressure is, for example, 0.1 MPa or higher and 50 MPa or lower and may be 1 MPa or higher and 20 MPa or lower.

The battery in the present disclosure is typically a lithium-ion secondary battery. As described above, the battery in the present disclosure may be a solid-state battery having a solid electrolyte layer. Alternatively, the battery in the present disclosure may be a semi-solid-state battery or may be an all-solid-state battery. One example of applications of the battery is an electric power source of a vehicle such as a hybrid electric vehicle (HEV), a plug-in hybrid electric vehicle (PHEV), a battery electric vehicle (BEV), a gasoline vehicle, or a diesel vehicle. Further, the battery in the present disclosure may be used as an electric power source of a movable body other than a vehicle (e.g., a train, a ship, or an airplane), or may be used as an electric power source of an electric product such as an information processing device.

### B. Battery Manufacturing Method

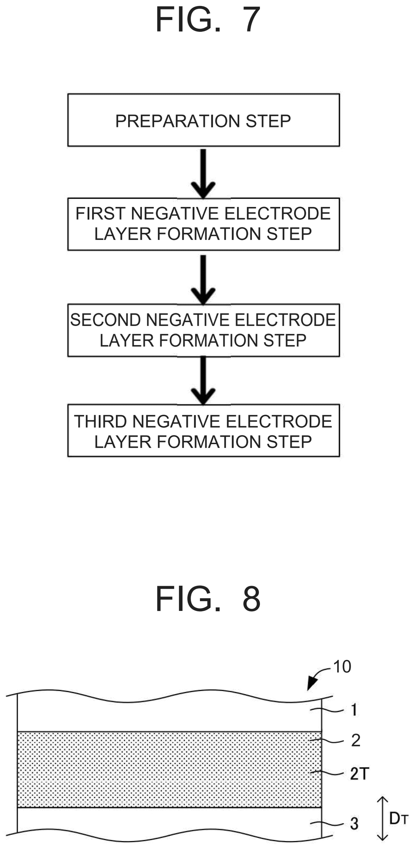

FIG. 7 is a flowchart illustrating the battery manufacturing method in the present disclosure. As shown in FIG. 7, in the battery manufacturing method in the present disclosure, first, a first negative electrode composite material containing the first composite particles and a second negative electrode composite material containing the second composite particles are prepared (preparation step). Next, the first negative electrode layer is formed using the first negative electrode composite material (first negative electrode layer formation step). Then, the second negative electrode layer is formed on the first negative electrode layer using the second negative electrode composite material (second negative electrode layer formation step). As shown in FIG. 7, the battery manufacturing method in the present disclosure may have a third negative electrode layer formation step of forming the third negative electrode layer on the second negative electrode layer using a third negative electrode composite material containing the first composite particles.

The method shown in the present disclosure can manufacture a battery the negative electrode layer of which meets one of the above-described conditions (i) to (iii).

### 1. Preparation Step

In the preparation step, the first negative electrode composite material containing the first composite particles and the second negative electrode composite material containing the second composite particles are prepared.

The first negative electrode composite material contains at least the above-described first composite particles, and may contain at least one of a binder, a conductive agent, and an electrolyte as necessary. As for the first composite particle, the binder, the conductive agent, and the electrolyte, what has been described in "A. Battery" applies.

The first negative electrode composite material may not or may contain the second composite particles. In the latter case, the weight proportion of the first composite particles is higher than the weight proportion of the second composite particles in the first negative electrode composite material.

The first negative electrode composite material may contain a dispersion medium, such as a solvent. Examples of solvents include organic solvents such as butyl butyrate, dibutyl ether, heptane, and tetrahydrofuran. The first negative electrode composite material may be a slurry or may be a powder.

The second negative electrode composite material can be described by the above description of the first negative electrode composite material, with "first" changed to "second."

### 2. First Negative Electrode Layer Formation Step

The first negative electrode layer formation step is a step of forming the first negative electrode layer using the first negative electrode composite material.

The first negative electrode layer may be formed on the negative electrode current collector or may be formed on the electrolyte layer. The first negative electrode layer may be formed by an application method or may be formed by a pressing method. The first negative electrode layer may be densified by pressing.

### 3. Second Negative Electrode Layer Formation Step

The second negative electrode layer formation step is a step of forming the second negative electrode layer on the first negative electrode layer using the second negative electrode composite material.

The second negative electrode layer formation step is the same as the first negative electrode layer formation step except that the second negative electrode composite material is used and that the second negative electrode layer is formed on the first negative electrode layer.

### 4. Third Negative Electrode Layer Formation Step

The third negative electrode layer formation step is a step of forming the third negative electrode layer on the second negative electrode layer using the third negative electrode composite material containing the first composite particles.

The third negative electrode layer formation step is the same as the first negative electrode layer formation step except that the third negative electrode composite material is used and that the third negative electrode layer is formed on the second negative electrode layer. The third negative electrode composite material may be the same composite material as or a different composite material from the above-described first negative electrode composite material.

### 5. Other Steps

The battery manufacturing method in the present disclosure usually has a positive electrode layer formation step of forming the positive electrode layer, an electrolyte layer formation step of forming the electrolyte layer, and a stacking step of obtaining a stack having the negative electrode current collector, the negative electrode layer, the electrolyte layer, the positive electrode layer, and the positive electrode current collector in this order.

The method of forming the positive electrode layer and the electrolyte layer is not particularly limited and a conventionally commonly known method can be adopted.

### 6. Battery

As for the battery manufactured by the above-described steps, what has been described in "A. Battery" applies, and therefore the description thereof will be omitted here.

Note that the present disclosure is not limited to the above embodiment. The above embodiment has been presented as an example, and the technical scope of the present disclosure includes all embodiments that have substantially the same configuration as the technical idea described in the claims of the present disclosure and that produce similar operational effects.

### Example 1

### Production of First Composite Particle and Second Composite Particle

In an Ar atmosphere, 0.65 g of Si particles (manufactured by Kojundo Chemical Laboratory Co., Ltd.) and 0.60 g of Li metal (manufactured by Honjo Metal Co., Ltd.) were mixed together in an agate mortar to obtain a LiSi precursor. In a glass reactor having an Ar atmosphere, 1.0 g of the LiSi precursor and 125 ml of a dispersion medium (1,3,5-trimethylbenzene, manufactured by Nacalai Tesque, Inc.) were mixed together using an ultrasound homogenizer (UH-50, manufactured by SMT CO., LTD.). After the mixing, the obtained LiSi precursor dispersion was cooled to 0°C, and 125 ml of ethanol (manufactured by Nacalai Tesque, Inc.) as a Li extraction solvent was added in drops thereto to induce a reaction for 120 minutes. After the reaction, 50 ml of acetic acid (manufactured by Nacalai Tesque, Inc.) was further added in drops to induce a reaction for 60 minutes. After the reaction, the liquid and the solid reactant were separated by suction filtration. The obtained solid reactant was vacuum-dried at 120°C for two hours to recover a Si-based active material (porous Si) that was porous particles.

The porous Si and styrene-butadiene rubber (SBR) were dispersed and partially dissolved in dimethyl carbonate (manufactured by Nacalai Tesque, Inc.) to obtain a slurry. This slurry was sprayed into a spray drier having an atmosphere of a 140°C nitrogen gas to dry the slurry (spray dry method). By adjusting the NV value of the slurry and the spray pressure and the slurry feed rate in the spray dry method, the first composite particles and the second composite particles having the proportions of the binder as shown in Table 1 were produced. The proportions of the binder in the first composite particle and the second composite particle were determined by a method to be described later.

### Production of Negative Electrode

Using an ultrasound homogenizer (UH-50, manufactured by SMT CO., LTD.), 1.0 g of the first composite particles, 0.04 g of a conductive agent (VGCF, manufactured by Resonac Corporation), 0.776 g of a sulfide solid electrolyte (LiI-LiBr-Li₃PS₄-based sulfide solid electrolyte, D₅₀ = 0.2 µm), 0.02 g of a binder (PVdF, manufactured by KUREHA CORPORATION), and 1.7 g of butyl butyrate (manufactured by KISHIDA CHEMICAL Co., Ltd.) were mixed together. Thus, a first negative electrode composite material (slurry) containing the first composite particles was produced. A second negative electrode composite material (slurry) containing the second composite particles was produced in the same manner as the first negative electrode composite material except that the first composite particles were changed to the second composite particles. By an application method using the first negative electrode composite material, a first negative electrode layer containing the first composite particles was formed on a negative electrode current collector (Ni foil). By an application method using the second negative electrode composite material, a second negative electrode layer containing the second composite particles was formed on the first negative electrode layer. Further, by an application method using the first negative electrode composite material, a third negative electrode layer containing the first composite particles was formed on the second negative electrode layer. Thus, the negative electrode layer 2 as shown in FIG. 6 was produced that had the first negative electrode layer 2S, the second negative electrode layer 2T, and the third negative electrode layer 2U and met condition (iii).

### Production of Positive Electrode

A binder (PVDF), a conductive agent, a sulfide solid electrolyte, and a positive electrode active material (NCM: LiNi_{0.8}Co_{0.15}Mn_{0.05}O₂) were added to an organic solvent. After the addition, the mixture was kneaded using an ultrasound homogenizer to obtain a positive electrode slurry. The obtained positive electrode slurry was applied to a positive electrode current collector (Al foil) and dried. Thus, a positive electrode having a positive electrode current collector and a positive electrode layer was obtained.

### Production of Battery for Evaluation

A binder (PVDF) and a sulfide solid electrolyte (Li₂S-P₂S₅-based sulfide solid electrolyte) were added to an organic solvent, and the mixture was kneaded using an ultrasound homogenizer. Thus, a composite material slurry was obtained. The composite material slurry was applied to a substrate (Al foil) and dried. Thus, a transfer member having a substrate and a solid electrolyte layer was obtained.

The produced positive electrode, negative electrode, and transfer member were each shaped into a strip. Next, the positive electrode and the transfer member were laid on top of each other such that the positive electrode layer and the solid electrolyte layer faced each other and subjected to roll pressing under a pressure of 50 kN/cm at 165°C. Thereafter, the substrate was removed to obtain a positive electrode-side member. The negative electrode and the transfer member were laid on top of each other such that the negative electrode layer and the solid electrolyte layer faced each other and subjected to roll pressing under a pressure of 50 kN/cm at 25°C. Thereafter, the substrate was removed to obtain a negative electrode-side member. Next, from the negative electrode-side member, a piece with a diameter of 13.00 mm was punched out, and from the positive electrode-side member, a piece with a diameter of 11.28 mm was punched out. The negative electrode-side member punched out was subjected to uniaxial pressing, with a sulfide solid electrolyte in powder form disposed on the solid electrolyte layer thereof. Next, the negative electrode-side member and the positive electrode-side member were laid on top of each other such that their solid electrolyte layers faced each other, and tabs for taking out a current were attached to the positive electrode and the negative electrode. Then, the resulting product was sealed in an aluminum laminate using a vacuum laminate sealer and restrained under a pressure of 5 MPa. Thus, a battery for evaluation (all-solid-state battery) was produced.

### Examples 2 to 7

By changing at least one of the NV value of the slurry, the spray pressure, and the slurry feed rate, the first composite particles having the proportions of the binder as shown in Table 1 were produced. Batteries for evaluation were produced in the same manner as in Example 1 except that these first composite particles were used.

### Comparative Example 1

A battery for evaluation was produced in the same manner as in Example 1 except that, as the negative electrode layer 2, only the second negative electrode layer 2T containing the second composite particles was formed as shown in FIG. 8.

### Evaluation

### Proportion of Binder

The produced first composite particles were pressed to produce a compact. A compact was produced from the second composite particles in the same manner. The obtained compacts were subjected to cross-section exposing processing, and an SEM-EDX measurement was performed on the obtained cross-sections to measure the proportions of the binder in the first composite particle and the second composite particle. The result is shown in Table 1.

### Charge-Discharge Test

With each produced battery for evaluation, 80 charge-discharge cycles were performed under the conditions of 25°C, 1/3C, and an SOC of 5% to 95%. The proportion of the capacity after 80 cycles to the capacity in the first cycle (initial capacity) was calculated as a capacity maintaining ratio (%). The result is shown in Table 1.

### Peeling of Negative Electrode Layer

From a cross-sectional image of the battery after the charge-discharge test, it was determined whether the negative electrode layer peeled. The result is shown in Table 1.

**Table 1**

| | Negative electrode layer | First composite particle (X1/X2) | Second composite particle (Y1/Y2) | Peeling of negative electrode layer | Capacity maintaining ratio (%) |
|---|---|---|---|---|---|
| Comparative Example 1 | FIG. 8 | - | 1.0 | Peeled | 77 |
| Example 1 | FIG. 6 | 1.2 | 1.0 | Not peeled | 81 |
| Example 2 | FIG. 6 | 1.7 | 1.0 | Not peeled | 83 |
| Example 3 | FIG. 6 | 2.3 | 1.0 | Not peeled | 86 |
| Example 4 | FIG. 6 | 3.1 | 1.0 | Not peeled | 85 |
| Example 5 | FIG. 6 | 3.6 | 1.0 | Not peeled | 84 |
| Example 6 | FIG. 6 | 4.3 | 1.0 | Not peeled | 73 |
| Example 7 | FIG. 6 | 4.8 | 1.0 | Not peeled | 71 |

As shown in Table 1, it was confirmed that the negative electrode layer was inhibited from peeling in the batteries according to the present disclosure. It is inferred that in Comparative Example 1, the electron conduction path or the ion conduction path was disrupted due to peeling of the negative electrode layer, resulting in the low capacity maintaining ratio. In Examples 6 and 7, while peeling of the negative electrode layer was inhibited, the capacity maintaining ratios were low. A possible explanation is that due to the proportion of the binder in the first composite particle (X1/X2) being too high, the reaction of the first composite particles was hindered while the reaction was concentrated in the second composite particles, leading to deterioration of the second composite particles. This result suggests that a battery the negative electrode layer of which is inhibited from peeling and which has a good capacity maintaining ratio can be obtained by setting (X1/X2) to 4.0 or lower, particularly 3.6 or lower.

## Claims

1. A battery (10) comprising:
a negative electrode current collector (1);
a negative electrode layer (2);
an electrolyte layer (3);
a positive electrode layer (4); and
a positive electrode current collector (5), wherein
the negative electrode current collector (1), the negative electrode layer (2), the electrolyte layer (3), the positive electrode layer (4), and the positive electrode current collector (5) are stacked in the order of the negative electrode current collector (1), the negative electrode layer (2), the electrolyte layer (3), the positive electrode layer (4), and the positive electrode current collector (5) in a thickness direction (D_{T}),
the negative electrode layer (2) contains first composite particles and second composite particles,
the first composite particles and the second composite particles each contain a Si-based active material and a binder,
the first composite particle has, in a cross-sectional shape of the first composite particle, an outer edge region (α) including an outer edge (E) and an internal region (β) located inward of the outer edge region (α),
the second composite particle has, in a cross-sectional shape of the second composite particle, an outer edge region (α) including an outer edge (E) and an internal region (β) located inward of the outer edge region (α),
in a case where a proportion of the binder in the outer edge region (α) of the first composite particle is X1, a proportion of the binder in the internal region (β) of the first composite particle is X2, a proportion of the binder in the outer edge region (α) of the second composite particle is Y1, and a proportion of the binder in the internal region (β) of the second composite particle is Y2,
the X1 and the X2 meet 1.2 ≤ (X1/X2), and
the Y1 and the Y2 meet (Y1/Y2) < 1.2,
the negative electrode layer (2) meets one of a first condition, a second condition, and a third condition in a case where the X1 and the X2 meet 1.2 ≤ (X1/X2), the Y1 and the Y2 meet (Y1/Y2) < 1.2, and, with a thickness of the negative electrode layer (2) being T and in the thickness direction (D_{T}), a region of the negative electrode layer (2) located at a distance of 0 T or longer and 0.2 T or shorter from an end portion (P) of the negative electrode layer (2) on a side of the negative electrode current collector (1) is a first region (2a), a region of the negative electrode layer (2) located at a distance of 0.4 T or longer and 0.6 T or shorter from the end portion (P) is a second region (2b), and a region of the negative electrode layer (2) located at a distance of 0.8 T or longer and 1.0 T or shorter from the end portion (P) is a third region (2c),
the first condition is that in the first region (2a), a content of the first composite particles is higher than a content of the second composite particles, and that in the third region (2c), a content of the second composite particles is higher than a content of the first composite particles,
the second condition is that in the first region (2a), a content of the second composite particles is higher than a content of the first composite particles, and that in the third region (2c), a content of the first composite particles is higher than a content of the second composite particles,
the third condition is that in the first region (2a), a content of the first composite particles is higher than a content of the second composite particles, that in the second region (2b), a content of the second composite particles is higher than a content of the first composite particles, and that in the third region (2c), a content of the first composite particles is higher than a content of the second composite particles,
the content of the first composite particles is 0 or higher, and
the content of the second composite particles is 0 or higher.

2. The battery (10) according to claim 1, wherein the X1 and the X2 meet (X1/X2) ≤ 3.6.

3. The battery (10) according to claim 1, wherein the Y1 and the Y2 meet (Y1/Y2) ≤ 1.0.

4. The battery (10) according to claim 1, wherein the T is 30 µm or larger and 1000 µm or smaller.

5. The battery (10) according to claim 1, wherein the electrolyte layer (3) contains a solid electrolyte.

6. The battery (10) according to claim 5, wherein the electrolyte layer (3) contains a sulfide solid electrolyte as the solid electrolyte.

7. The battery (10) according to claim 1, wherein the Si-based active material is a porous particle.

8. The battery (10) according to claim 1, wherein the battery (10) is a solid-state battery.

9. The battery (10) according to claim 1, wherein:
the content of the first composite particles is 30 weight% or higher and 60 weight% or lower;
the content of the second composite particles is 30 weight% or higher and 60 weight% or lower; and
a total of the content of the first composite particles and the content of the second composite particles is 60 weight% or higher and 90 weight% or lower.

10. The battery (10) according to claim 3, wherein the Y1 and the Y2 meet 0.6 ≤ (Y1/Y2).

11. A manufacturing method of the battery (10) according to any one of claim 1 to claim 10 that manufactures the battery (10), the manufacturing method comprising:
preparing a first negative electrode composite material containing the first composite particles and a second negative electrode composite material containing the second composite particles;
forming a first negative electrode layer using the first negative electrode composite material; and
forming a second negative electrode layer on the first negative electrode layer using the second negative electrode composite material.

12. The manufacturing method according to claim 11, further comprising forming a third negative electrode layer on the second negative electrode layer using a third negative electrode composite material containing the first composite particles.
